## Europäisches Patentamt
## European Patent Office
## Office européen des brevets

(11) Veröffentlichungsnummer: **0 152 370**
**B1**

(12) # EUROPÄISCHE PATENTSCHRIFT

(45) Veröffentlichungstag der Patentschrift:
17.12.86

(51) Int. Cl.⁴: **A 47 J 31/22**

(21) Anmeldenummer: 85810005.0

(22) Anmeldetag: 11.01.85

(54) **Maschine mit einer Schleudertrommel.**

(30) Priorität: 10.02.84 CH 651/84

(43) Veröffentlichungstag der Anmeldung:
21.08.85 Patentblatt 85/34

(45) Bekanntmachung des Hinweises auf die Patenterteilung:
17.12.86 Patentblatt 86/51

(84) Benannte Vertragsstaaten:
AT BE DE FR GB IT NL SE

(56) Entgegenhaltungen:
DE-A-1 429 852
DE-A-2 428 188
DE-C-936 767
FR-A-1 303 836
FR-A-1 584 848
FR-A-2 132 310

(73) Patentinhaber: ROTORCAFE AG, Postfach 124, CH-3280 Muntelier- Murten (CH)

(72) Erfinder: Varga, Franz, Combette 22, CH- 3280 Murten (CH)

(74) Vertreter: Steiner, Martin, c/o AMMANN PATENTANWAELTE AG BERN Schwarztorstrasse 31, CH- 3001 Bern (CH)

EP 0 152 370 B1

LIBER, STOCKHOLM 1986

**Beschreibung**

Die Erfindung betrifft eine Maschine mit einer Schleudertrommel zum Ausschleudern von Flüssigkeit aus nassem Gut und mit einem Abstreifer zum Entfernen des dabei entstehenden Rückstandes aus der Schleudertrommel. Eine derartige Maschine zur Herstellung von Kaffee-Extrakt ist in der DE-OS 26 26 330 beschrieben. Sie weist ein äusserst kompliziertes Getriebe zum Antrieb der Schleudertrommel mit verschiedenen Geschwindigkeiten auf, wobei die Achse der Schleudertrommel seitlich der Hauptantriebsachse der Maschine liegt. Die vertikalachsige Schleudertrommel ist unten stellenweise dauernd abgeschlossen und stellenweise dauernd offen, was ungünstige Bedingungen für den Betrieb ergibt. Die Maschine ist vorwiegend für Dauerbetrieb ausgelegt und ein rasches, kurzfristiges und restloses Auswerfen des Kaffeesatzes nach dem jeweiligen Aufbrühen einzelner Portionen ist nicht möglich.

Es ist auch bekannt, die Schleudertrommel aus zwei Schalen aufzubauen, die gemeinsam und relativ zueinander axial verschoben werden können. In einer ersten axialen Lage der Schleudertrommel dient dieselbe zum Ausschleudern der Flüssigkeit aus dem nassen Gut, insbesondere beim Aufbrühen von Kaffee. In einer zweiten axialen Stellung der Schleudertrommel wird dieselbe durch axiale Relativverschiebung der beiden Schalen der Trommel geöffnet, um den Kaffeesatz radial auszuschleudern. Eine saubere, restlose Entfernung des Kaffeesatzes ist hierbei praktisch nicht möglich (DE-OS 26 16 296).

Es ist ferner bekannt, in der Schleudertrommel einen axial verschiebbaren Boden einzubauen, welcher jeweils axial verschoben wird, um den Rückstand, Kaffeesatz, in einer Kaffeemaschine axial auszustossen (CH-PS 600 847). In diesem Falle ist es ebenfalls schwierig, stets eine saubere und schnelle Reinigung zu erzielen und die dauernde Betriebssicherheit zu gewährleisten.

Der vorliegenden Erfindungen liegt die Aufgabe zugrunde, eine Maschine der an erster Stelle beschriebenen Art mit Abstreifer im Aufbau und in der Arbeitsweise erheblich zu vereinfachen und zu verbessern. Das wird dadurch erreicht, dass die Schleudertrommel an einer Stirnseite durch einen abhebbaren Deckel verschlossen ist, dass Abstreifer und Schleudertromnel zum Ausschleudern der Flüssigkeit mit gleicher Drehzahl antreibbar sind, und dass die Drehzahl der Schleudertrommel gegenüber derjenigen des Abstreifers herabsetzbar ist, derart, dass der rotierende, axiale Förderwirkung aufweisende Abstreifer den Rückstand bei abgehobenem Deckel auswirft. Dieser Aufbau erlaubt eine extrem schnelle und vollständige Reinigung, indem bei abgebremster Schleudertrommel und bei mit voller Arbeitsdrehzahl rotierendem Abstreifer der Rückstand praktisch schlagartig und restlos durch das vom abgehobenen Deckel freigegebene Ende der Schleudertrommel entfernt wird. Während des Schleudervorganges ist dagegen der Abstreifer unwirksam, indem seine Drehzahl mit derjenigen der Schleudertrommel übereinstimmt, und die Schleudertrommel ist beidseitig geschlossen, so dass keinerlei Flüssigkeitsverluste möglich sind. Weitere Ausgestaltungen der Erfindung sind in den abhängigen Ansprüchen 2 - 10 dargestellt. Die Schleudertrommel kann dabei für eine gute Verwertung eines zu extrahierenden Gutes, beispielsweise Kaffee, optimal gestaltet werden. Sie kann axial kurz im Verhältnis zu ihrem Durchmesser, also mit verhältnismässig kleiner Filterfläche ausgeführt sein und da sie während des Ausschleuderns geschlossen ist, kann beispielsweise ein zu extrahierendes Gut, wie Kaffeepulver, und die Extraktionsflüssigkeit in beliebiger, optimaler Verteilung auf der ganzen Filterfläche zugeführt werden. Der Antrieb der Schleudertrommel kann in einfachster Weise über eine Rutschkupplung, beispielsweise Reibungskupplung, magnetische Kupplung oder dergleichen, erfolgen und zum Abbremsen der Schleudertrommel genügt eine einfache mechanische Bremse. Teure, aufwendige und viel Raum beanspruchende Getriebe fallen somit völlig weg, denn es sind überhaupt nur mit einer einzigen Antriebswelle starr verbundene und von derselben über eine Rutschkupplung angetriebene Teile vorhanden. Die Betätigung des Deckels der Schleudertrommel kann mittels eines einfachen, drehzahlabhängigen Mechanismus erfolgen, wobei jeweils das Schliessen des Deckels durch Fliehkraft und das Oeffnen des Deckels durch Federkraft oder Schwerkraft erfolgen kann.

Die Erfindung wird nun anhand eines in der Zeichnung dargestellten Ausführungsbeispiels einer Kaffeemaschine näher erläutert.

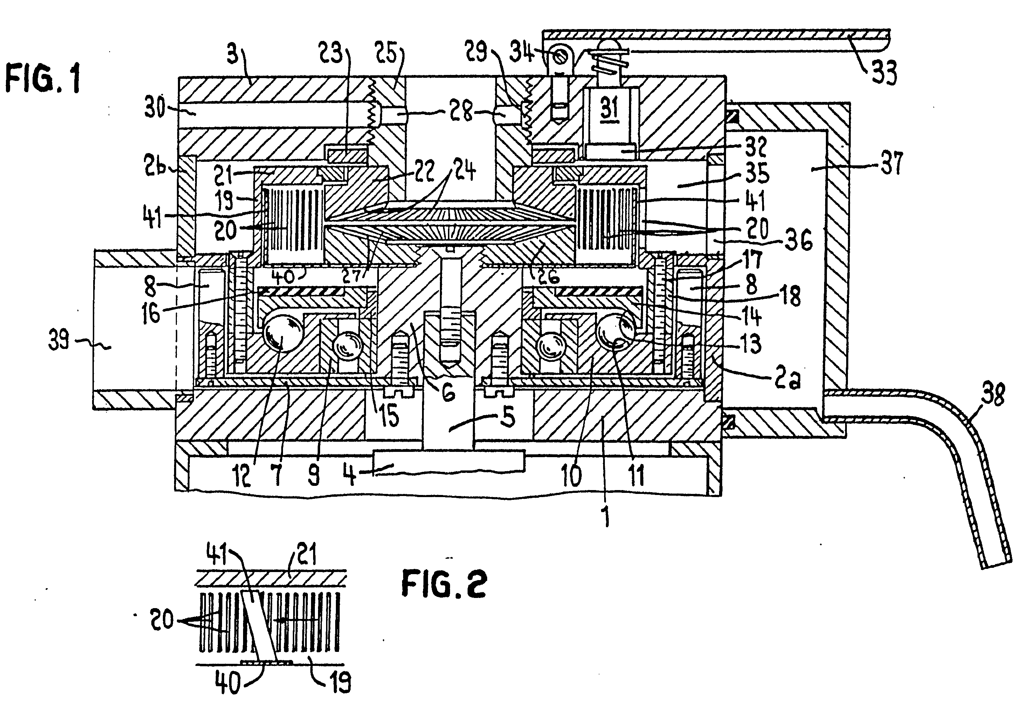

Figur 1 zeigt einen Axialschnitt durch die Maschine und

Figur 2 zeigt einen Teilschnitt durch die Schleudertrommel.

Das Gehäuse der dargestellten Maschine weist einen Boden 1, einen zweiteiligen Mantel 2a, 2b und einen Deckel 3 auf, welche fest und dicht miteinander verbunden sind. Unter dem Gehäuseboden 1 ist ein Antriebsmotor, vorzugsweise ein Asynchronmotor, angeordnet, von welchem nur das obere Lager 4 und die nach oben ragende Welle 5 gezeigt sind. Mit der Welle 5 ist eine Nabe 6 verschraubt. Mit der unteren Stirnseite der Nabe 6 ist eine Ventilatorscheibe 7 verschraubt, auf welche Ventilatorflügel 8, beispielsweise in Form zweier diametral gegenüberliegender Stifte, aufgesetzt sind. Der Ventilator wird somit stets starr vom Motor angetrieben. Auf eine Schulter der Nabe 6 ist der innere Kranz eines Kugellagers aufgesetzt, auf dessen äusseren Kranz 9 ein Teller 10 aufgezogen ist.

Der Teller 10 ist somit frei drehbar auf der Nabe 6 gelagert. In eine Ringnut 11 des Tellers 10 sind Kugeln 12 lose eingesetzt. Diese Kugeln können unter der Wirkung der Zentrifugalkraft gegen eine nach unten gekrümmte Ringfläche 13 eines Deckels 14 wirken, dessen Nabe 15 auf der Nabe 6 drehbar gelagert ist und sich auf den Innenkranz des erwähnten Kugellagers abstützt. Der Deckel 14 ist an der Oberseite mit einem flachen Dichtungsring 16 versehen. Der Deckel ist somit drehbar und axial verschiebbar auf der Nabe 6 angeordnet. Unter der Wirkung der Fliehkraft der Kugeln 12 kann er aus der dargestellten offenen Ruhestellung angehoben werden.

Der Teller 10 ist mittels Schrauben 17 und Distanzhülsen 18 mit einer Schleudertrommel 19 verbunden, deren Mantel mit Schlitzen 20 versehen ist und somit als Filter wirkt. Der obere Flansch 21 der Schleudertrommel 20 greift dichtend in eine Nut zwischen einem oberen Kranz 22, einer Kaffeemühle und einem darauf aufgesetzten Ring 23 ein. Die Schleudertrommel ist somit zusammen mit dem Teller 10 frei drehbar gelagert. Der obere Kranz 22 der Kaffeemühle mit seiner konischen Mahlverzahnung 24 sitzt auf einem Gewinderohr 25. Der untere Kranz 26 der Kaffeemühle, welcher mit einer entsprechenden konischen Mahlverzahnung 27 versehen ist, ist mit der Nabe 6 fest verschraubt und wird somit vom Motor starr angetrieben. Durch Verdrehung der Gewindehülse 25 kann die axiale Stellung des oberen nicht drehenden Kranzes 22 der Mühle fein verstellt und damit die Feinheit des gemahlenen Kaffees bestimmt werden. In die Bohrung der Gewindehülse 25 münden radiale Bohrungen 28, die mit einem äusseren Ringraum 29 kommunizieren, in welchen ein Zufuhrkanal 30 für heisses Brühwasser mündet. Dieses Brühwasser kann aus einem nicht dargestellten Boiler der Kaffeemaschine selbst oder aus einer anderen verfügbaren Heisswasserquelle zugeführt werden.

In einer Bohrung des Gehäusedeckels 3 befindet sich ein Bremskolben 31 mit einem Bremsbelag 32. Der Bremskolben 31 liegt unter einem Bremshebel 33, der durch Druck auf das Hebelende um eine Schwenkachse 34 nach unten gedrückt werden kann, um den Bremsbelag 32 gegen den oberen Flansch der Schleudertrommel zu pressen. Eine Feder hält den Hebel 33 und den Bremskolben 31 normalerweise in der dargestellten, oberen, unwirksamen Stellung.

Zwischen der Schleudertrommel 19 und dem Gehäusemantel 2b ist ein Ringraum 35 gebildet, in welchem sich aus der Schleudertrommel 19 nach aussen geworfener Kaffee sammelt und durch eine Oeffnung 36 des Gehäusemantels in eine Sammelkammer 37 und von dort durch den Stutzen 38 in eine Tasse oder ein sonstiges, untergestelltes Gefäss fliesst. Die Ventilatorflügel 8 rotieren in einem Ringraum, der mit einem Auswurfstutzen 39 für den Kaffeesatz in Verbindung steht.

Zwischen der Nabe 6 und dem unteren Kranz 26 der Kaffeemühle ist ein dünner Arm 40 festgeklemmt, dessen Enden zu zwei diametral gegenüberliegenden, dünnen Messern 41 abgebogen sind. Diese Messer 41 sind, wie Figur 2 zeigt, in der durch Pfeil angedeuteten Drehrichtung nach vorne geneigt. Der Arm 40 mit den Messern 41 bildet einen Abstreifer zur Entfernung des Kaffeesatzes in später beschriebener Weise.

Zur Herstellung von Kaffee wird wie folgt vorgegangen: Zuerst wird der Motor angelassen. Die damit starr verbundenen Teile, nämlich der Ventilator 7, 8, der Abstreifer 40, 41 und der untere Kranz 26 der Kaffeemühle werden sogleich mit voller Drehzahl angetrieben. Der Teller 10, die damit verbundene Schleudertrommel 19 und der Deckel 14 werden dagegen nur allmählich durch die wirksamen Reibungen in Drehung versetzt, wobei die Drehzahl der starr miteinander verbundenen Teile 10 und 19 einerseits und des Deckels 14 anderseits nicht genau übereinstimmen müssen. Beim Erreichen einer bestimmten Drehzahl des Tellers 10 wird der Deckel 14 unter der wirkung der Kugeln 12 angehoben, und seine Dichtung 16 wird an die untere, ringförmige Oeffnung der Schleudertrommel zwischen ihrem äusseren, unteren Flansch und dem unteren Kranz 26 der Mühle angelegt. Die Schleudertrommel ist damit unten verschlossen. Diese Vorgänge spielen sich in relativ kurzer Zeit von beispielsweise einer Sekunde ab. Man kann also praktisch gleich nach dem Einschalten des Motors eine vorbereitete Quantität von Kaffeebohnen durch die Bohrung der Gewindehülse 25 einwerfen. Diese Bohnen werden zwischen den Kränzen 22 und 26 der Mühle zermahlen und das Kaffeepulver wird gegen den als Filter wirkenden Mantel der Schleudertrommel geworfen. Da inzwischen die Schleudertrommel auf volle Geschwindigkeit beschleunigt ist, stimmt ihre Drehzahl mit derjenigen des Abstreifers 40, 41 überein, so dass der Abstreifer unwirksam ist und den Aufbau einer Schicht von Kaffeepulver nicht stört. Nach erfolgtem Mahlen der eingeworferen Bohnen wird durch die Zuleitung 30 Brühwasser eingelassen, welches durch den Ringraum 29 und die Bohrungen 28 nach unten in die Mühle fliesst und durch dieselbe nach aussen gegen den Mantel der Schleudertrommel geworfen wird. Pulverrückstände in der Mühle werden hierbei ausgewaschen und somit wird aller gemahlene Kaffee intensiv extrahiert. Der Kaffee wird, wie bereits erwähnt, durch den geschlitzten, als Filter wirkenden, Mantel der Schleudertrommel durchgeschleudert und in den Sammelraum 35 ausgeworfen. Er fliesst in der erwähnten Weise ab und kann am Stutzen 38 aufgefangen werden. Der gemahlene Kaffee wird dabei sehr schnell trockengeschleudert und soll dann entfernt werden. Zu diesem Zweck wird durch Druck auf den Hebel 33 die Bremse betätigt. Damit werden die Schleudertrommel 19 und der damit starr verbundene Teller 10 sowie der an der Schleudertrommel noch anliegende Deckel 14 rasch abgebremst, und da die Zentrifugalkraft der Kugeln 12 abnimmt, fällt der Deckel in die dargestellte Offenstellung zurück. Der Abstreifer 40, 41 rotiert dagegen mit voller Drehzahl weiter, wobei die nach vorne geneigten Messer 41 den Kaffeesatz sehr rasch und sauber von der Innenseite des Filtermantels der Schleudertrommel abstreifen und nach unten aus der dort offenen Schleudertrommel auswerfen. Durch die Ventilatorwirkung der Mühle und insbesondere des Ventilators wird noch Luft nachgesogen und der verhältnismässig trockene Kaffeesatz wird praktisch schlagartig durch den Stutzen 39 ausgeworfen und gelangt in ein nicht dargestelltes Sammelgefäss. Damit ist die Maschine gereinigt. Lässt man nun den Hebel 33 los, so werden in der beschriebenen Weise der Teller 10 mit der Schleudertrommel und der Deckel 14 wieder beschleunigt, und es können wieder Kaffeebohnen eingeworfen und dann Brühwasser eingeleitet werden. In dieser Weise können mehrere Portionen Kaffee hergestellt werden, wobei zur jeweiligen Reinigung der Maschine nur auf den Hebel 33 zu drücken ist, aber der Motor kann ständig weiterlaufen. Da, wie erwähnt, der Deckel 14 jeweils nicht unbedingt gleich rasch beschleunigt wird wie der Teller 10 und die damit verbundene Schleudertrommel, trifft der Deckel jeweils mit einer gewissen Relativdrehung auf die Oeffnungsränder der Schleudertrommel auf. Damit werden dort eventuell noch haftende Kaffeekörner zerdrückt und zerrieben und können somit keine Undichtheit des Abschlusses der Schleudertrommel bewirken.

Nach jedem Gebrauch der Kaffeemaschine, sei es zur Herstellung einer oder mehrerer Portionen, kann die Maschine gewaschen werden. Hierzu wird bei laufendem Motor durch die Leitung 30 oder gegebenenfalls auch von oben direkt durch die Bohrung der Gewindehülse 25 Spülwasser eingelassen. Dieses wasser wird durch die Mühle beschleunigt und nach aussen geworfen und reinigt die Schleuderkammer und die Sammel- und Abflusskanäle der Maschine. Es ist dann vorteilhaft, durch Betätigung der Bremse die Schleudertrommel bei niedriger Geschwindigkeit oder im Stillstand weites zu spülen, in welchem Falle infolge des starken Soges des Ventilators das durch die Mühle ausgeschleuderte Wasser gar nicht mehr durch den Filtermantel der Schleudertrommel durchtritt, sondern nach unten abgesaugt wird, wobei sogar eine gewisse Rückströmung und damit Rückspülung des Filters stattfinden kann.

Wird gelegentlich nach dem Zubereiten einer Tasse Kaffee vergessen, den Hebel 33 zum Entfernen des Kaffeesatzes zu drücken, wird bei weiterlaufendem Motor die nächste Charge gemahlenen Kaffees auf den vorhandenen Kaffeesatz aufgebracht und dann auch gebrüht. Wird nach der Herstellung nur einer Tasse Kaffee der Motor abgestellt, ohne den Hebel 33 zu drücken, bleibt der Kaffeesatz in der Schleudertrommel. Beim nächsten Einschalten des Motors wird der Abstreifer sofort auf volle Drehzahl gebracht und entfernt den Kaffeesatz bevor der Deckel 14 die Schleudertrommel abschliesst, womit die Maschine ebenfalls zur Herstellung einer weiteren Portion Kaffee gereinigt ist.

Es sei erwähnt, dass am Umfang gleichmässig verteilt mehrere Kugeln 12 angeordnet sind, um ein gleichmässiges Anpressen des Deckels 14 zu erzielen. Es können dabei nicht dargestellte Stifte vorhanden sein oder der Teller 10 kann käfigartig ausgebildet sein, um die Kugeln mitzunehmen und gleichmässig am Umfang verteilt zu halten, damit auch keine Unwucht entstehen kann. Anstelle von Kugeln 12 könnten beliebige unter Fliehkraft auf den Deckel 14 wirkende Gewichte vorhanden sein.

Es sind verschiedenste Ausführungsvarianten möglich. Wenn auch ein besonderer Vorteil der Konzeption darin liegt, dass eine Mühle direkt in die Schleudertrommel eingebaut sein kann, braucht die Maschine keine Mühle aufzuweisen, in welchem Falle jeweils gemahlenes Kaffeepulver einzufüllen ist. Es müsste dann allerdings eine geeignete Schleudervorrichtung zum gleichmässigen Verteilen des Kaffeepulvers in der Schleuderkammer vorhanden sein. Die Mitnahme der nicht fest mit dem Motor gekuppelten Teile erfolgt im einfachsten Falle über Rutschkupplungen wie im Ausführungsbeispiel dargestellt. Wäre es erforderlich, die beschleunigenden Momente genauer zu definieren, könnten gegebenenfalls besondere Reibbeläge, magnetische Kupplungen oder dergleichen vorgesehen sein. Die Bremse kann anders, beispielsweise elektrisch, über einen Elektromagneten oder pneumatisch oder hydraulisch betätigt werden. Das trifft besonders zu bei grösseren Maschinen, die zum Ausschleudern irgendwelcher nasser Güter dienen können. Das Oeffnen und Schliessen des Dekkels könnte gegebenenfalls auch anders erfolgen, beispielsweise elektromagnetisch, pneumatisch oder hydraulisch, wobei die Steuerung in Abhängigkeit von der Drehzahl des Tellers 10 und der Schleudertrommel 19 erfolgen kann. Bei ganz einfachen Maschinen kann die Zuleitung 30 für Brühwasser wegfallen, in welchem Falle jeweils zuerst Kaffeebohnen und dann heisses Brühwasser von oben durch die Bohrung der Gewindehüle 25 manuell zugeführt werden müssten. Die Kaffeemaschine kann in verschiedensten Formen und Kombinationen verwendet werden, sei es für den Haushalt oder für das Gewerbe oder auch in Kaffeeautomaten. Im Falle von Automaten können die beschriebenen Vorgänge durch eine Programmsteuerung automatisch durchgesteuert werden. Die Teile 2a und 2b des Gehäusemantels können gegeneinander verdreht werden, um die relative Lage des mit dem Unterteil 1a verbundenen Auswurfs 39 und der mit dem Oberteil 2b verbundenen Kammer 37 in gewissen Grenzen den Bedürfnissen anzupassen. Es ist möglich, den Deckel 14 und seinen Betätigungsmechanismus oben statt unten anzubringen, wobei zum Oeffnen des Deckels eine Feder, Magnete oder dergleichen vorhanden sein könnten.

**Patentansprüche**

1. Maschine mit einer Schleudertrommel zum Ausschleudern von Flüssigkeit aus nassem Gut und mit einem Abstreifer zum Entfernen des dabei entstehenden Rückstandes aus der Schleudertrommel, dadurch gekennzeichnet, dass die Schleudertrommel (19, 21) an einer Stirnseite durch einen abhebbaren Deckel (14, 16) verschlossen ist, dass Abstreifer (40, 41) und Schleudertrommel (19, 21) zum Ausschleudern der Flüssigkeit mit gleicher Drehzahl antreibbar sind und dass die Drehzahl der Schleudertrommel (19, 21) gegenüber derjenigen des Abstreifers (40, 41) herabsetzbar ist, derart, dass der rotierende, axiale Förderwirkung aufweisende Abstreifer (40, 41) den Rückstand bei abgehobenem Dekkel (14, 16) auswirft.

2. Maschine nach Anspruch 1, dadurch gekennzeichnet, dass die Schleudertrommel (19, 21) durch Rutschkupplung von einem Antrieb (5) mitgenommen wird, mit dem der Abstreifer (40, 41) fest verbunden ist, und dass die Schleudertrommel abbremsbar ist.

3. Maschine nach Anspruch 1 oder 2, gekennzeichnet durch eine der Drehzahl der Schleudertrommel (19, 21) entsprechend gesteuerte Betätigungsvorrichtung für den Deckel (14, 16), wobei der Deckel durch Fliehkraft geschlossen und durch Federkraft oder Schwerkraft geöffnet wird.

4. Maschine nach einem der Ansprüche 1 bis 3, dadurch gekennzeichnet, dass der Abstreifer (40, 41) geneigte Messer (41) aufweist.

5. Maschine nach einem der Ansprüche 1 bis 4, dadurch gekennzeichnet, dass der Durchmesser der Schleudertrommel (19, 21) deren axiale länge übertrifft.

6. Maschine nach Anspruch 4 oder 5, dadurch gekennzeichnet, dass der Abstreifer mindestens einen radialen Arm (40) am einen Ende der Schleudertrommel und axiale Messer (41) aufweist, derart, dass der Innenraum der Schleudertrommel für zusätzliche Aggregate, z.B. eine Mühle (22, 26) frei ist.

7. Maschine nach Anspruch 6, gekennzeichnet durch einen gemeinsamen Einlass (25) für Mahlgut und Brühwasser in die Mühle (22, 26), womit ein ständiges Reinigen der Mühle erfolgt.

8. Maschine nach einem der Ansprüche 1 bis 6, gekennzeichnet durch einen Förderventilator (7, 8) im Auslass für den Rückstand.

9. Maschine nach einem der Ansprüche 1 bis 8, dadurch gekennzeichnet, dass Ausgänge für die Flüssigkeit (37, 38) bzw. für den Rückstand (39) am Gehäuse (2) verstellbar angebracht sind.

10. Maschine nach einem der Ansprüche 1 bis 9, dadurch gekennzeichnet, dass die Schleudertrommel vertikalachsig und der Deckel (14, 16) unten angeordnet sind.

**Claims**

1. Machine comprising a centrifugal drum for centrifuging liquid from a wet good and a stripper for removing from the centrifugal drum the residue developing therein, characterized in that the centrifugal drum (19, 21) is closed at a front side by a lift off cover (14, 16), in that the stripper (40, 41) and the centrifugal drum (19, 21) are capable to be driven at the same number of turns for centrifuging the liquid and in that the number of turns of the centrifugal drum (19, 21) is capable to be reduced with respect to the one of the stripper (40, 41) so that the rotating stripper (40, 41) having an action of axial displacement, ejects the residue when the cover (14, 16) is lifted.

2. Machine according to claim 1, characterized in that the centrifugal drum (19, 21) is driven through a friction clutch from a driving mechanism (5) to which the stripper is firmly connected and in that the centrifugal drum is capable to be braked down.

3. Machine according to claim 1 or 2, characterized by an actuating device for the cover (14, 16) controlled in accordance with the number of turns of the centrifugal drum (19, 21), the cover being closed by the centrifugal force and opened by the force of a spring or by gravity.

4. Machine according to one of the claims 1 to 3, characterized in that the stripper (40, 41) comprises an inclined cutter (41).

5. Machine according to one of the claims 1 to 4, characterized in that the diameter of the centrifugal drum (19, 21) is greater than its axial length.

6. Machine according to claim 4 or 5, characterized in that the stripper comprises at least one radial arm (40) at one extremity of the centrifugal drum and an axial cutter (41) so that the internal space of the centrifugal drum is free for additional aggregates, i.e. a mill (22, 26).

7. Machine according to claim 6, characterized by a common inlet (25) in the mill (22, 26) for the good to be milled and the scalding water, which causes a permanent cleaning of the mill.

8. Machine according to one of the claims 1 to 6, characterized by a winding fan (7, 8) in the outlet for the residue.

9. Machine according to one of the claims 1 to 8, characterized in that the housing (2) comprises adjustable outlets for the liquid (37, 38), resp. for the residue (39).

10. Machine according to one of the claims 1 to 9, characterized in that the shaft of the centrifugal drum is vertically arranged and in that the cover (14, 16) is provided below.

## Revendications

1. Machine comportant un panier centrifuge pour centrifuger du liquide d'un produit humide et un racleur pour enlever du panier centrifuge le résidu qui s'y forme, caractérisée en ce que le panier centrifuge (19, 21) est fermé à une face frontale par un couvercle relevable (14, 16), en ce que le racleur (40, 41) et le panier centrifuge (19, 21) peuvent être entraînés au même nombre de tours pour centrifuger le liquide et en ce que le nombre de tours du panier centrifuge (19, 21) peut être réduit en comparaison de celui du racleur (40, 41), de sorte que le racleur (40, 41) tournant et possédant un effet de déplacement axial, éjecte le résidu lorsque le couvercle (14, 16) est levé.

2. Machine selon la revendication 1, caractérisée en ce que le panier centrifuge (19, 21) est entraîné par un accouplement à friction à partir d'un dispositif de commande (5) auquel le racleur (40, 41) est fixé fermement et en ce que le panier centrifuge peut être freiné.

3. Machine selon la revendication 1 ou 2, caractérisée par un dispositif d'actionnement pour le couvercle (14, 16) commandé selon le nombre de tours du panier centrifuge (19, 21), le couvercle étant fermé par la force centrifuge et ouvert par la force d'un ressort ou par gravité.

4. Machine selon l'une des revendications 1 à 3, caractérisée en ce que le racleur (40, 41) comprend un couteau incliné (41).

5. Machine selon l'une des revendications 1 à 4, caractérisée en ce que le diamètre du panier centrifuge (19, 21) est plus grand que sa longueur axiale.

6. Machine selon la revendication 4 ou 5, caractérisée en ce que le racleur comprend au moins un bras radial (40) à une extrémité du panier centrifuge et un couteau axial (41), de sorte que l'espace intérieur du panier centrifuge est libre pour des aggrégats additionnels, par exemple un moulin (22, 26).

7. Machine selon la revendication 6, caractérisée par une entrée commune (25) dans le moulin (22, 26) pour le produit à moudre et l'eau de cuisson, ce qui produit un nettoyage permanent du moulin.

8. Machine selon l'une des revendications 1 à 6, caractérisée par un ventilateur d'évacuation (7, 8) dans la sortie pour le résidu.

9. Machine selon l'une des revendications 1 à 8, caractérisée en ce que le boîtier (2) comprend des sorties ajustables de liquide (37, 38), resp. de résidu (39).

10. Machine selon l'une des revendications 1 à 9, caractérisée en ce que le panier centrifuge est disposé avec l'axe vertical et que le couvercle (14, 16) est disposé en-dessous.

FIG.1

FIG.2